# EUROPÄISCHE PATENTSCHRIFT

(11) **EP 0 504 167 B1**
(45) Veröffentlichungstag und Bekanntmachung des Hinweises auf die Patenterteilung: **15.03.1995**
(21) Anmeldenummer: 90917359.3
(22) Anmeldetag: 20.11.1990
(51) Int. Cl.: H04L 25/49, H04L 1/00

(54) **VERFAHREN ZUR BITORIENTIERTEN DATENÜBERTRAGUNG**
PROCESS FOR BIT-ORIENTED DATA TRANSMISSION
PROCEDE DE TRANSMISSION DE DONNEES AU NIVEAU DU BIT

(30) Priorität: 04.12.1989 DE 3940097
(43) Veröffentlichungstag der Anmeldung: 23.09.1992
(73) Patentinhaber: SIEMENS AKTIENGESELLSCHAFT, 80333 München (DE)
(72) Erfinder: OPPER, Burkhard, D-5419 Oetzingen (DE); SCHMITZ, Werner, D-8522 Herzogenaurach (DE)
(86) Internationale Anmeldenummer: EP9001986
(87) Internationale Veröffentlichungsnummer: WO9108634

(56) Entgegenhaltungen:
- EP-A- 0 053 958
- EP-A- 0 094 322
- FR-A- 2 516 729
- US-A- 4 501 000
- Optical & Quantum Electronics, Band 12, Nr. 1, Januar 1980, Chapman and Hall Ltd, (London - GB); R. Petrovic: "On-line codes for digital optical communications", Seiten 91-93.

## Beschreibung

Die vorliegende Erfindung betrifft ein Verfahren zur bitorientierten Datenübertragung nach dem HDLC(High-Level Data Link Control)-Protokoll mit an beiden Enden der Übertragungsstrecke angeordneten Fernbetriebseinheiten (Controllern). Das gemäß der DIN 66 221, Teil 1 vom April 1980 bzw. ISO-Norm IS 3309, Ausgabe 79, genormte HDLC-Protokoll schreibt eine am Anfang und am Ende jedes Datenübertragungsblockes vorzusehende Blockbegrenzung (Flag) in Form der Bitfolge 01111110 (HEX 7E) vor und legt in diesem Zusammenhang auch die Steuerung zur Sicherstellung der Bitfolgeunabhängigkeit im Datenübertragungsblock fest. Diese Steuerung besteht darin, daß von der sendenden Einheit der Inhalt eines Datenübertragungsblocks zwischen den beiden Blockbegrenzungen geprüft und nach fünf unmittelbar aufeinanderfolgenden Binärzeichen 1 ein Binärzeichen 0 eingefügt wird. Die empfangende Einheit überprüft den Datenübertragungsblock im gleichen Bereich und entfernt jedes 0-Bit, wenn es unmittelbar nach fünf aufeinanderfolgenden 1-Bits erkannt wird. Mit diesem Steuerungsverfahren, auch als "Bitstuffing" bezeichnet, soll verhindert werden, daß eine Bitfolge, welche im zu übermittelnden Nutzdatenstrom zufällig der Bitfolge des Flags entspricht, auf der Empfangsseite irrtümlich als solches ausgewertet und zu einem vorzeitigen Blockabbruch führt (EP-A-0 094 322).

Das Bitstuffing erweist sich aber als eine gravierende Fehlerquelle bei bestimmten Bit-Fehlern im Nutzdatenstrom. Entsteht nämlich im HDLC-Text durch einen 1-Bit-Fehler die Folge von fünf 1-Bits, zufällig gefolgt von einer 0, so wird diese 0 vom empfängerseitigen Controller irrtümlich entfernt und damit die gesamte spätere Bitfolge des Datenübertragungsblocks um eine Stelle verschoben. Eine Verschiebung des Bitstroms in entgegengesetzter Richtung tritt auf, wenn durch einen 1-Bit-Fehler von den fünf vor einem richtigerweise durch das Bitstuffing eingefügten 0-Bit auftretenden 1-Bits eines in ein 0-Bit verfälscht wird, wodurch das durch das Bitstuffing eingefügte 0-Bit auf der Empfängerseite als solches nicht mehr erkannt wird und deshalb im Datenstrom verbleibt. In beiden Fällen wird die gesamte, auf das fehlerbehaftete Bit folgende Information verfälscht. Es kann also mit dem HDLC-Protokoll nur eine Hamming-Distanz von d = 1 erreicht werden, was für viele Anwendungen, insbesondere in der Prozeß- und Regeltechnik nicht ausreicht.

Die Erfindung stellt sich die Aufgabe, bei dem HDLC-Übertragungsverfahren auf einfache Weise und bei mäßiger Redundanz die Hamming-Distanz zu erhöhen. Erfindungsgemäß wird diese Aufgabe mit den im kennzeichnenden Teil des Hauptanspruchs angegebenen Maßnahmen gelöst. Grundgedanke des erfindungsgemäßen Verfahrens ist also, das Bitstuffing zu unterbinden. Mit dem erfindungsgemäßen Verfahren kann eine Hamming-Distanz von d = 4 erreicht werden.

Die Erfindung samt ihren weiteren Ausgestaltungen, welche in den Unteransprüchen gekennzeichnet sind, wird nachstehend anhand der Figuren näher erläutert. Dabei zeigt
Figur 1 ein Blockschaltbild zur Übertragung,
Figur 2 den Aufbau eines Datenübertragungsblocks,
Figur 3 ein Flußdiagramm zur Datenübertragung und
Figur 4 ein Ausführungsbeispiel zur Tupelcodierung.

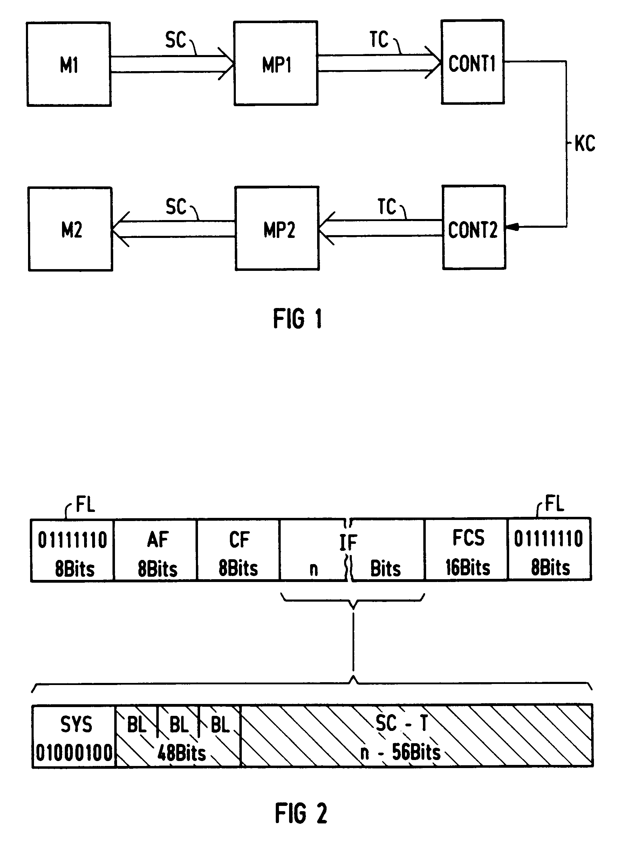

Figur 1 zeigt ein Blockschaltbild für die Übertragung von in einem Sendespeicher M1 abgelegten Daten zu einem Speicher M2 auf der Empfangsseite. Die zu übermittelnden Daten werden im Quellcode SC byteweise von dem Mikroprozessor MP1 abgerufen und entsprechend dem HDLC-Protokoll aufbereitet. Außerdem nimmt der Mikroprozessor MP1 die Umcodierung der zu übermittelnden Daten vom Quellcode SC in den erfindungsgemäßen Tupelcode TC vor. Dabei werden je zwei im Datenfeld aufeinanderfolgende Bits in ein mehr als zwei Bits umfassendes, in einem Tupel bestehenden Codewort umgewandelt. Bei bitpaarweiser Umwandlung in den Tupelcode ergeben sich vier Möglichkeiten der 2-Bit-Folge, nämlich 00, 01, 10 und 11 und der Vorrat der verwendeten Tupel-Codeworte besteht in einem mit dem Gewicht 0, welches also lauter 0-Bits aufweist und drei weiteren mit dem Gewicht 1, welche also nur ein einziges 1-Bit und sonst lauter 0-Bits aufweisen. Der sendeseitige HDLC-Controller versieht den vom Mikroprozessor MP1 aufbereiteten Datenblock am Anfang und am Ende mit der Bitfolge 01111110 (HEX 7E) als Blockbegrenzung (Flag). Der sendeseitige HDLC-Controller Contl sendet nun diesen so aufbereiteten Datenübertragungsblock (Frame) als Datenstrom im Kanalcode KC auf einem 1-Bit breiten Übertragungskanal zu dem empfangsseitigen HDLC-Controller. Dieser überprüft den Inhalt des Datenübertragungsblocks zwischen den beiden Flags. Im empfangsseitigen Mikroprozessor MP2 findet dann eine Decodierung des Nutzdatenstromes vom Tupelcode TC in den Quellcode SC statt, welcher dann im Empfangsspeicher M2 abgelegt wird.

Figur 2 zeigt den prinzipiellen Aufbau eines Datenübertragungsblockes. Am Anfang und am Ende des Datenübertragungsblockes befinden sich die als Blockbegrenzung dienenden Flags FL. An das kopfseitige Flag schließt sich ein 8-Bit langes Adressenfeld AF und an dieses ein ebenfalls 8-Bit langes Steuerfeld CF an, während vor dem Flag am Schluß des Datenübertragungsblockes eine 16-Bit lange Elockprüfzeichenfolge (Frame Checking Sequence) FCS angeordnet ist. Die erwähnten, beidseits des die Nutzinformation enthaltenden, n Bits umfassenden Datenfeldes IF angeordneten Felder des Datenübertragungsblockes sind durch das HDLC-Protokoll festgelegt. Das erfindungsgemäß gestaltete Datenfeld IF beginnt mit einer Synchronisierungssequenz SYS, welche die Bitfolge der binär hexadezimal verschlüsselten Zahl 44 (01000100) aufweist. Daran schließt sich eine die Länge des Datenfeldes IF beinhaltende Angabe BL in Tupelcodierung. Diese Angabe ist dreifach vorgesehen. Darauf fclgt die tupelcodierte Nutzinformation SC-T. Ist z.B. ein Bitpaar der Originalnutzinformation zu im Datenfeld IF angeordneten Codewörtern in Form von Quadrupeln, d.h. mit jeweils vier Bitstellen pro Codewort bzw. pro Originalbitpaar verschlüsselt worden, dann werden für die im Original drei Byte lange Blocklängenangabe 48 Bits benötigt.

Die quadrupelcodierten Teile des Nutzdatenfeldes IF - in Figur 2 gestrichelt hervorgehoben - weisen zum HDLC-Flag eine Hamming-Distanz von d = 4 auf und da diese Hamming-Distanz auch bei der Synchronisierungssequenz SYS besteht, weist also das Datenfeld IF insgesamt diese Hamming-Distanz zum Flag auf. Bei entsprechender Tripelcodierung, welche eine etwas geringere Redundanz zur Folge hätte, würde sich die Hamming-Distanz zum Flag auf d = 3 erniedrigen.

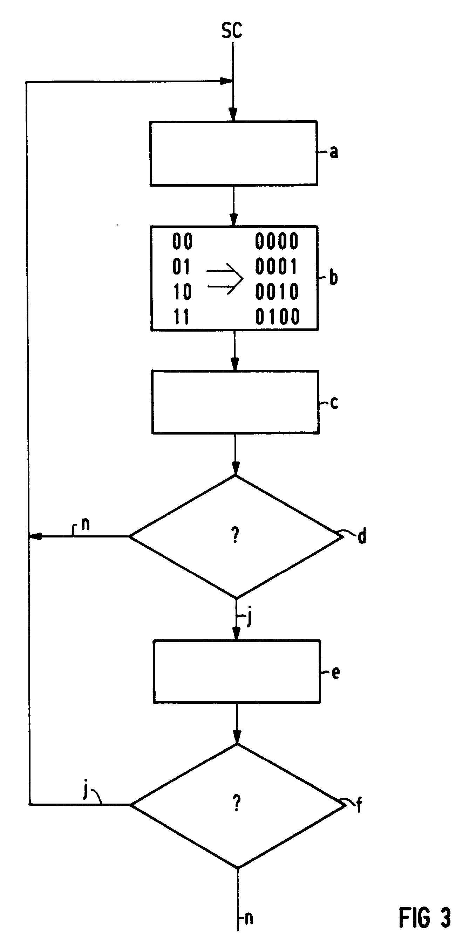

Figur 3 gibt das erfindungsgemäße Verfahren, soweit es die Sendeseite betrifft, anhand eines Flußdiagramms wieder. Bei Schritt a werden zwei Bits des Quellcodes SC aus dem Sendespeicher gelesen und in Schritt b gemäß der dort angegebenen Weise einem Tupel zugeordnet. Und zwar wird aus der Originalbitfclge 00 das Tupel-Codewort 0000, aus der Bitfolge 01 das Tupel-Codewort 0001, aus der Originalbitfolge 10 das Tupel-Codewort 0010 und aus der Originalbitfolge 11 das Tupel-Codewort 0100 erzeugt. Eine äquivalente Quadrupelcodierung wäre, den vier Bitpaaren die Codeworte 0000, 0010, 0100 und 1000 zuzuordnen. Auch dann müßten mindestens vier aufeinanderfolgende Null-Bits in 1-Bits umwandelnde Fehler auftreten, um ein Flag im Nutzdatenstrom vorzutäuschen. Im Schritt c werden diese so erzeugten Tupel-Codeworte in ein für den HDLC-Controller bestimmtes Byte eingeordnet und im Schritt d geprüft, ob das Byte jeweils vollständig mit zwei Codewörtern aufgefüllt ist. Falls dies nicht zutrifft, werden zwei neue Bits aus dem Sendespeicher eingelesen und im anderen Fall das Byte im Schritt e an den HDLC-Controller weitergegeben. Im Schritt f wird geprüft, ob noch weitere zu sendende Origlnaldaten vorhanden sind und bejahendenfalls wieder das nächste Bitpaar des Quellcodes SC aus dem Sendespeicher gelesen. Anderenfalls ist die Aufbereitung der Nutzdaten beendet. Die Wiedergewinnung der Originalinformation, d.h. eine Tupel-Decodierung des Inhalts des Nutzdatenfeldes IF erfolgt auf der Empfangsseite entsprechend.

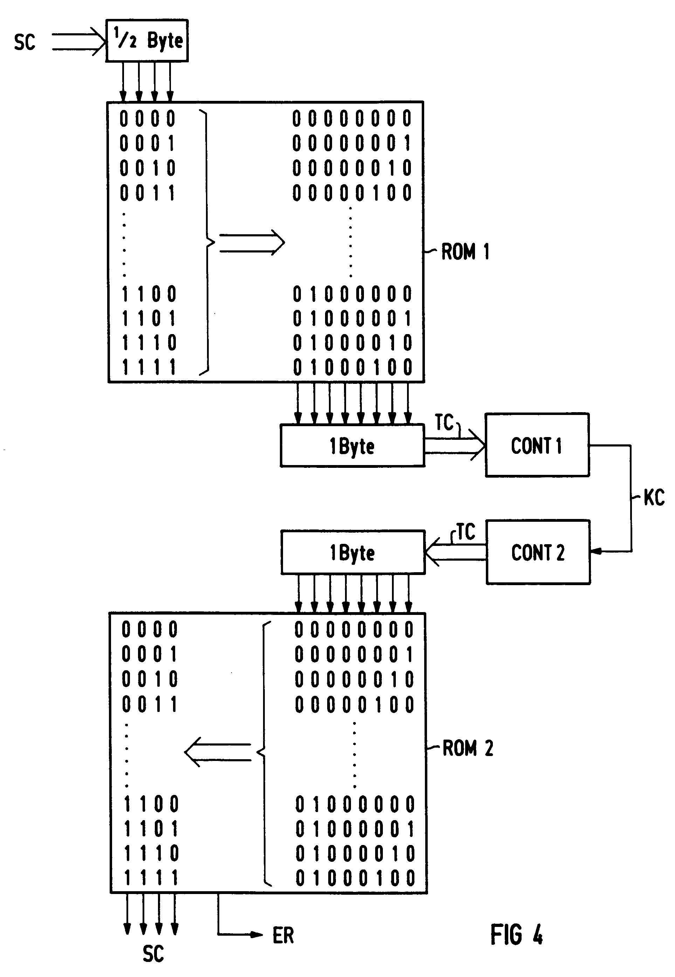

Sowohl die Tupel-Codierung als auch die Tupel-Decodierung können mittels entsprechend ausgestalteter Programme für den Mikroprozessor MP1 auf der Sendeseite bzw. für den Mikroprozessor MP2 auf der Empfangsseite bewerkstelligt werden. Zur Beschleunigung dieser Umcodierungen kann dies auch unter Verwendung von Festwertspeichern erledigt werden. Hierzu zeigt Figur 4 ein Ausführungsbeispiel, welches die byteweise Informationsverarbeitung der HDLC-Controller unterstützt und dadurch zusätzlich zur Beschleunigung der Umcodierungen beiträgt. Jeweils zwei Bitpaare des Quellcodes SC werden gleichzeitig an die Adressiereingänge eines empfangsseitig angeordneten Festwertspeichers ROM1 gelegt und an den acht Ausgängen dieses Festwertspeichers erscheinen dann parallel die beiden zugehörigen Tupel-Codeworte. Aus dem Vergleich der in den Figuren 3 und 4 angegebenen Codierungstabellen wird deutlich, daß beiden dasselbe Prinzip zugrundeliegt. Je zwei Tupelcodeworte werden parallel aus dem Festwertspeicher ROM1 ausgelesen werden und byteweise an den HDLC-Controller CONT1 auf der Sendeseite weitergegeben werden. Nach bitserieller Übertragung des Kanalcodes KC zum empfangsseitigen HDLC-Controller CONT2 werden jeweils mit einem Byte, d.h. acht aufeinanderfolgenden Bitstellen des Kanalcodes acht Eingänge eines zweiten Festwertspeichers ROM2 adressiert und an vier Ausgängen erscheinen die zwei Bitpaare des Quellencodes SC. Auf einer Sammelsignalleitung erscheint ein Fehlersignal ERR, sofern nichttupelgerechte 8-Bitfolgen auftreten. Auf diese Weise kann zum frühest möglichen Zeitpunkt das Auftreten von falsch übermittelten Informationen des Datenfeldes erkannt werden.

## Patentansprüche

1. Verfahren zur bitorientierten Datenübertragung nach dem HDLC-Protokoll mit an beiden Enden der Übertragungsstrecke angeordneten Controllern, **dadurch gekennzeichnet**, daß sendeseitig vor dem HDLC-Controller jeweils zwei im Datenfeld aufeinanderfolgende Bits in ein mehr als zwei Bits umfassendes, in einem Tupel bestehenden Codewort umgewandelt werden, wobei ein Codewort 0-Bits und die drei übrigen jeweils nur ein 1-Bit aufweisen, und daß empfangsseitig nach dem HDLC-Controller eine Rückumwandlung der Codeworte in zwei aufeinanderfolgende Datenfeldbits erfolgt.

2. Verfahren nach Anspruch 1, **dadurch gekennzeichnet**, daß die Codeworte jeweils eine Länge von 4 Bit aufweisen.

3. Verfahren nach Anspruch 2, **dadurch gekennzeichnet**, daß am Anfang des Datenfeldes (IF) eine sich auf dieses beziehende Blocklängenangabe (BL) dreifach vorgesehen und tupelcodiert übertragen wird.

4. Verfahren nach Anspruch 1 oder 3, **dadurch gekennzeichnet**, daß unmittelbar vor der Blocklängenangabe eine Synchronisierungssequenz (SYS) mit der Bitfolge der binär hexadezimal verschlüsselten Zahl 44 (01000100) vorgesehen ist.

5. Verfahren nach Anspruch 4, **dadurch gekennzeichnet**, daß die Tupelcodierung halbbyteweise und die Tupeldecodierung byteweise vorgenommen wird.

6. Verfahren nach Anspruch 4 oder einem der folgenden, **dadurch gekennzeichnet**, daß für die Tupelcodierung und die Tupeldecodierung jeweils ein Festwertspeicher (ROM1 bzw. ROM2) vorgesehen ist.

7. Verfahren nach Anspruch 6, **dadurch gekennzeichnet**, daß am empfangsseitigen Festwertspeicher (ROM2) eine Abfrage auf nicht tupelgerechte Bitkombinationen seiner Eingänge erfolgt.

## Claims

1. Process for the bit-oriented data transmission according to HDLC protocol with controllers arranged at both ends of the transmission link, characterized in that on the transmission side in front of the HDLC controller in each case two successive bits in the data field are converted into a code word comprising more than two bits and consisting of a Tupel, with one code word having 0-bits and the three others in each case only having one 1-bit, and in that on the receiving side after the HDLC controller a reconversion of the code words into two successive data field bits takes place.

2. Process according to claim 1,
characterized in that the code words in each case have a length of 4 bits.

3. Process according to claim 2,
characterized in that at the start of the data field (IF) a block length statement (BL) relating thereto is provided three times and is transmitted in Tupel code.

4. Process according to claim 1 or 3,
characterized in that directly in front of the block length statement a synchronization sequence (SYS) with the bit sequence of the number 44 (01000100) coded in a binary and hexadecimal manner is provided.

5. Process according to claim 4,
characterized in that the Tupel-coding is undertaken half-byte-wise and the Tupel-decoding is undertaken byte-wise.

6. Process according to claim 4 or one of the following claims, characterized in that a fixed-value memory (ROM1 and ROM2) is provided in each case for the Tupel-coding and the Tupel-decoding.

7. Process according to claim 6,
characterized in that at the fixed-value memory (ROM2) on the receiving side a scan takes place on bit combinations of its inputs which are not Tupel-correct.

## Revendications

1. Procédé de transmission par bits de données suivant le protocole HDLC par des contrôleurs disposés aux deux extrémités de la voie de transmission, caractérisé en ce que l'on convertit, du côté émission en amont du contrôleur HDLC, deux bits se succédant dans la zone de données en un mot de code comprenant plus de deux bits et constitué d'un nuplet, un mot de code comportant des bits 0 et les trois autres ne comportant chacun qu'un bit 1, et on effectue du côté réception en aval du contrôleur HDLC une conversion inverse des mots de code en deux bits se succédant de la zone de données.

2. Procédé suivant la revendication 1, caractérisé en ce que les mots de code ont chacun une longueur de quatre bits.

3. Procédé suivant la revendication 2, caractérisé en ce que l'on prévoit trois fois au début de la zone (IF) de données une indication (BL) de longueur de bloc relative à cette zone et on la transmet dans le code du nuplet.

4. Procédé suivant la revendication 1 ou 3, caractérisé en ce qu'il est prévu directement avant l'indication de longueur de bloc une séquence (SYS) de synchronisation ayant la suite de bits du nombre 44 en code hexadécimal binaire (01000100).

5. Procédé suivant la revendication 4, caractérisé en ce que l'on effectue le codage en nuplets en demi-octets et l'on effectue le décodage de nuplets en octets.

6. Procédé suivant la revendication 4 ou l'une des suivantes, caractérisé en ce qu'il est prévu pour le codage en nuplets et pour le décodage de nuplets une mémoire permanente (ROM1 et ROM2).

7. Procédé suivant la revendication 6, caractérisé en ce qu'il s'effectue du côté réception de la mémoire permanente (ROM2) une interrogation sur les combinaisons de bits non conformes aux nuplets, de ses entrées.
